# FASCICULE DE BREVET EUROPEEN

(11) **EP 2 945 814 B1**
(45) Date de publication et mention de la délivrance du brevet: **09.11.2016**
(21) Numéro de dépôt: 13803052.3
(22) Date de dépôt: 13.12.2013
(51) Int. Cl.: B60K 11/04, B60K 11/08, B60R 19/02, B62D 25/08, F01P 5/06

(54) **OBTURATEUR D'INTERFACE A CHARNIERE ENTRE UN GUIDE D'AIR DE REFROIDISSEMENT ET UNE TRAVERSE AVANT EXTREME, COMPARTIMENT MOTEUR DE VEHICULE AINSI EQUIPE, ET CHARNIERE POUR OBTURATEUR**
SCHNITTSTELLENDICHTUNG MIT SCHARNIER ZWISCHEN EINER KÜHLLUFTFÜHRUNG UND EINEM FRONTEND-QUERTRÄGER, MOTORRAUM EINES FAHRZEUGES DAMIT UND SCHARNIER FÜR DICHTUNG
HINGED INTERFACE SEAL BETWEEN A COOLING AIR GUIDE AND A FRONT-END CROSSMEMBER, VEHICLE ENGINE COMPARTMENT PROVIDED WITH SAME, AND HINGE FOR SEAL

(30) Priorité: 15.01.2013 FR 1350339
(43) Date de publication de la demande: 25.11.2015
(73) Titulaire: Renault, 92100 Boulogne Billancourt (FR)
(72) Inventeur: GHIONOIU, Ionut Aurelian, Bucarest (RO)
(86) Numéro de dépôt international: PCT/EP2013/076508
(87) Numéro de publication internationale: WO 2014/111211

(56) Documents cités:
- EP-A2- 1 982 860
- FR-A1- 2 923 758
- FR-A1- 2 930 223
- JP-A- 2009 006 777

## Description

La présente invention concerne un obturateur pour réaliser l'interface entre un guide d'air de refroidissement et une traverse avant extrême.

Un obturateur comportant les caractéristiques du préambule de la revendication 1 est connu du document JP 2009 006777 A.

On connaît par le document US7451844 un véhicule automobile comprenant, à l'avant du compartiment moteur, un guide d'air canalisant de l'air pénétrant par au moins une ouverture ou grille d'aération dans la façade avant ou peau de bouclier avant du véhicule pour le conduire à un ensemble de refroidissement du moteur, comprenant classiquement un radiateur à eau et le condenseur, et éventuellement d'autres éléments rassemblés dans ce qu'il est convenu d'appeler la « valise de refroidissement ». Une traverse extrême ou poutre de choc, reliée solidement aux longerons, barre l'espace à l'avant de l'ensemble de refroidissement ; cette traverse peut être sous forme d'un profilé ouvert vers l'arrière du véhicule comme représenté dans le document cité ; lorsqu'on vient monter la valise de refroidissement dans le compartiment du moteur, la traverse extrême est déjà présente et indémontable dans ledit compartiment ; le guide d'air de condenseur doit venir s'adapter au voisinage de la traverse, du côté de sa concavité. Comme cette concavité offre une voie d'échappement latéral à l'air qui pénètre par le bouclier avant et devrait s'engouffrer dans le guide d'air, on cherche à obturer cette voie en plaçant dans la concavité de la traverse deux obturateurs, au niveau des parois latérales du guide d'air. Chaque obturateur est une simple plaque ayant comme contour la section de la traverse.

On s'est aperçu que ces obturateurs, bien qu'ils bouchent l'essentiel de la voie latérale d'échappement d'air, laissent quand même un interstice avec le guide d'air qui, pour faible qu'il soit, suffit à faire tomber de manière très notable l'efficacité du condenseur. Or il du fait des contraintes de montage de la valise de refroidissement alors que la traverse extrême est déjà en place et indémontable, il s'avère très difficile d'ajuster avec une précision suffisante le guide d'air au voisinage de la traverse et de l'obturateur afin d'annuler complètement l'interstice de fuite qui les sépare.

Le but de l'invention est d'améliorer l'étanchéité latérale à l'air avec le guide d'air au niveau des obturateurs de la traverse.

L'invention atteint son but grâce à un obturateur sous forme de plaque comportant un bord curviligne et un bord rectiligne, le bord curviligne étant adapté à la section concave d'une traverse extrême avant de véhicule, et le bord rectiligne étant adapté à se plaquer contre un bord de guide d'air, caractérisé en ce que l'obturateur est formé de deux parties articulées par une charnière sensiblement étanche, une première partie comportant essentiellement le bord curviligne et une seconde partie comportant essentiellement le bord rectiligne, la charnière comportant des moyens de blocage en différentes positions de la seconde partie par rapport à la première, dont au moins une position étendue sensiblement dans le prolongement de la première partie et une position rabattue sensiblement perpendiculaire à la position étendue. La première partie est destinée à se fixer dans la concavité de la traverse et à boucher l'essentiel de la section de ladite traverse ; elle comporte avantageusement des moyens de fixation rapide à la traverse, par exemple sous forme d'organes de clipsage (par exemple des pions à reliefs d'encliquetage coopérant avec des trous de la traverse). La seconde partie forme un volet ou palette mobile, articulé sur la première partie fixée à la traverse, et que le monteur, lors du montage du guide d'air, vient ouvrir de la position rabattue à la position étendue pour plaquer le volet mobile contre la paroi du guide d'air, afin de parfaire l'étanchéité latérale aux fuites d'air à ce niveau.

Avantageusement, les moyens de blocage consistent d'une part en un crantage formé sur une partie et d'autre part en une griffe élastique d'engagement avec le crantage formé sur l'autre partie.

Avantageusement, l'obturateur est moulé en une matière plastique, y compris les moyens de blocage. L'articulation de charnière est avantageusement constituée par une zone amincie comprise entre les deux parties, et les moyens de blocage en position sont avantageusement formés sur deux godets s'emboîtant l'un dans l'autre lors du pivotement d'une partie par rapport à l'autre.

L'invention concerne aussi un agencement de compartiment moteur de véhicule, comprenant vers l'avant du véhicule une traverse d'extrémité de châssis présentant une concavité tournée vers l'arrière, et un guide d'air comprenant deux bords verticaux adjacents à ladite traverse du côté de sa concavité, deux obturateurs étant fixés dans la concavité de la traverse au droit desdits deux bords verticaux de guide d'air, chaque obturateur étant sous forme de plaque comportant un bord curviligne et un bord rectiligne, le bord curviligne étant adapté à la section concave de ladite traverse extrême, et le bord rectiligne étant adapté à se plaquer contre un bord vertical de guide d'air, caractérisé en ce que chaque obturateur est formé de deux parties articulées par une charnière sensiblement étanche, une première partie comportant essentiellement le bord curviligne et une seconde partie comportant essentiellement le bord rectiligne, la charnière comportant des moyens de blocage en différentes positions de la seconde partie par rapport à la première, dont au moins une position étendue sensiblement dans le prolongement de la première partie et une position rabattue sensiblement perpendiculaire à la position étendue.

L'invention concerne aussi une charnière moulée à moyens de blocage en position, particulièrement adaptée pour l'obturateur de l'invention. La charnière de l'invention comprend deux parties planes articulées le long d'un articulation rectiligne et des moyens de blocage en position d'une partie par rapport à l'autre, caractérisée en ce que les moyens de blocage sont formés sur deux godets s'emboîtant l'un dans l'autre lors du pivotement d'une partie par rapport à l'autre. Chaque godet a sensiblement la forme d'un secteur de cylindre (analogue à une portion de camembert), comprenant deux joues en secteurs circulaires centrés sur l'articulation rectiligne, reliées par un fond cylindrique. Avantageusement, l'un des godets comprend un dispositif de crantage, par exemple des cannelures formées dans le fond cylindrique, et l'autre godet comprend une griffe élastique qui vient se placer de manière réversible dans le dispositif de crantage.

Bien qu'une telle charnière puisse être utilisée dans d'autres applications, l'application préférée est son utilisation pour réaliser l'obturateur de l'invention.

D'autres caractéristiques et avantages de l'invention ressortiront de la description suivante d'un exemple de réalisation. Il sera fait référence aux dessins annexés sur lesquels :
La figure 1 est une vue en perspective avant d'une traverse extrême avant de châssis d'un véhicule automobile, et d'un guide d'air de condenseur disposé juste en aval de la traverse, avec l'indication des deux interfaces A et B entre la traverse et le guide d'air, dans lesquelles se placent les obturateurs à charnière de l'invention, qui sont montrés en perspective vus de l'arrière du véhicule dans les figures 2A et 2B.
Les figures 2A et 2B sont des vues en perspective arrière de deux obturateurs de l'invention placés dans la concavité de la traverse extrême de la figure 1, aux interfaces A et B, et dans lesquels le volet mobile est respectivement en position rabattue et étendue.
La figure 3 est une vue de détail des moyens de blocage en position de la charnière de l'obturateur, vus de l'extérieur des godets emboîtants, en position de non-engagement des moyens de blocage.
La figure 4 est une vue de détail des mêmes moyens de blocage, vus de l'intérieur des godets emboîtants, en position d'engagement des moyens de blocage, le volet mobile étant en position étendue.
La figure 5 est une vue de détail des mêmes moyens de blocage, vus de l'intérieur des godets emboîtants, en position d'engagement complet des moyens de blocage, le volet mobile étant en position rabattue.
La figure 6 est une vue en perspective d'un obturateur à charnière conforme à l'invention.
La figure 7 est une vue de détail en coupe orthogonale à l'axe de la charnière, au niveau des godets emboîtants, avec représentation de plusieurs positions du volet mobile.

On a rappelé dans certaines des figures le trièdre de référence orthonormé traditionnel X, Y, Z des directions respectivement longitudinale dirigée vers l'arrière du véhicule, transversale dirigée vers la droite du véhicule, et verticale dirigée vers le haut du véhicule.

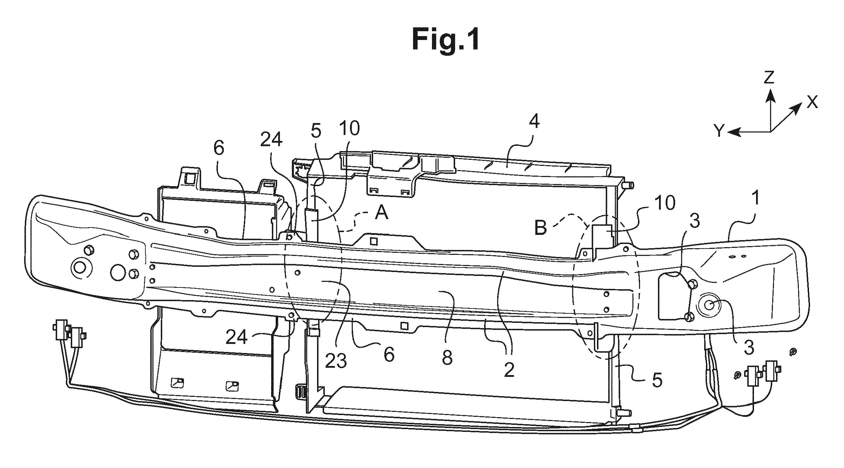

La figure 1 montre, vue de l'avant du véhicule, une traverse extrême 1 constituée d'une poutre profilée plus ou moins en U, tournant sa concavité vers l'arrière. La traverse 1 peut comprendre divers reliefs de rigidification comme les nervures 2, et des perçages 3 destinés à la fixation d'un certain nombre d'éléments ou à des passages de câbles et conduites. La traverse 1 est fixée par ses extrémités aux extrémités avant de deux longerons du châssis de véhicule, non représentés. Juste derrière la traverse 1, on voit le cadre amont du guide d'air 4 du condenseur du système de refroidissement. Les côtés verticaux 5 de ce cadre viennent au voisinage immédiat de la traverse 1, sensiblement vers le milieu du cadre, au niveau des zones A et B. Au-dessus et en dessous de la traverse 1, le cadre de guide d'air 4 se prolonge vers l'avant par des parois non représentées qui s'étendent sensiblement jusque au bouclier avant et forment ainsi une conduite qui reçoit l'air de la calandre pour le conduire vers le système de refroidissement disposé en aval. Compte tenu de la forme creuse de la traverse 1 au voisinage du cadre de guide d'air 4, il faut prévoir d'étancher latéralement les fuites d'air possible dans la concavité de la traverse, et c'est pourquoi on place dans les deux zones A et B un obturateur 10 constitué d'une plaque épousant vers l'avant sensiblement la concavité de la traverse 1, venant vers l'arrière au plus près du cadre de guide d'air 4 et disposé dans un plan parallèle au plan vertical longitudinal du véhicule (plan parallèle à XOZ).

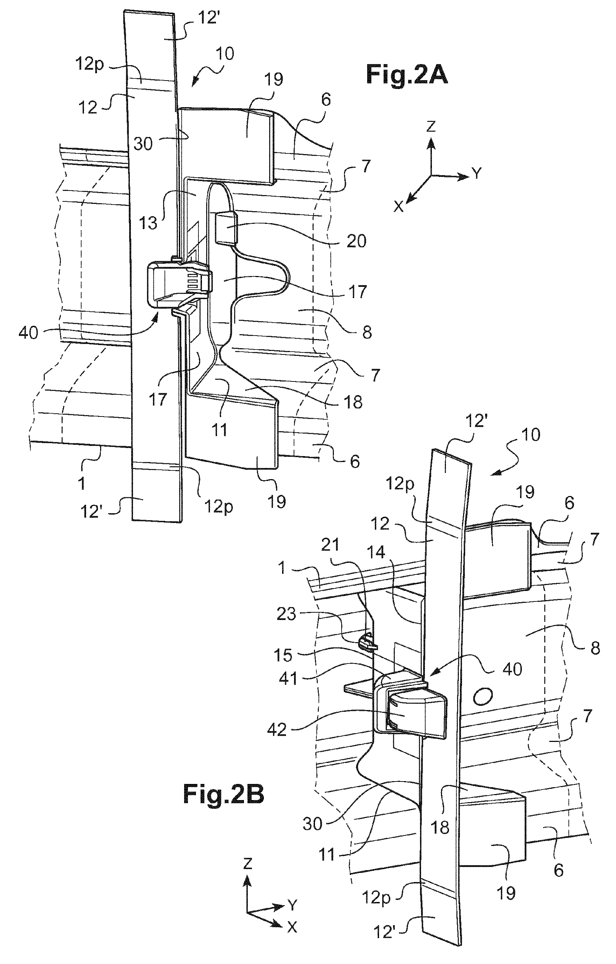

On a représenté en détail sur les figures 2A et 2B les deux obturateurs 10 conformes à l'invention fabriqués intégralement par moulage, par exemple en polypropylène.

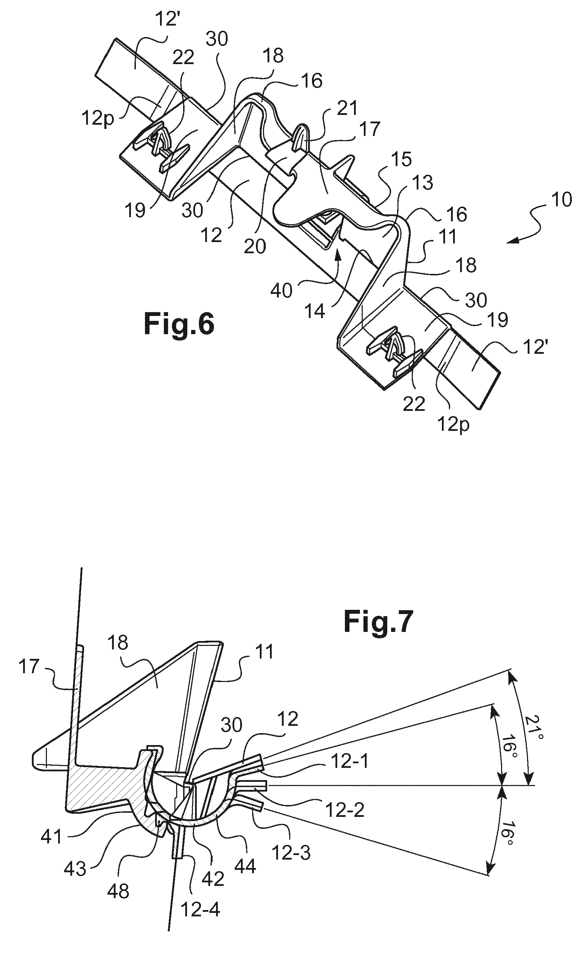

On voit sur la figure 2A la traverse 1 vue de l'arrière, c'est-à-dire du côté de sa concavité. La traverse 1 comporte deux rebords plats 6 entre lesquels s'étend la concavité de la traverse. L'arrière des deux nervures 2 dessine deux rainures 7 entre lesquelles est formé un plateau 8. L'obturateur 10 conforme à l'invention comprend deux parties articulées par une articulation verticale 30 de charnière qu'on voit aussi sur la figure 6 : une partie fixe 11 et une partie de volet mobile 12. La partie fixe 11 est destinée à obturer l'essentiel de la section de la traverse 1 et a donc un profil curviligne qui correspond à celle-ci, tandis que le volet articulé 12 est sensiblement sous forme d'une plaquette allongée verticale, qui dépasse vers le haut et vers le bas de la partie fixe 11 et se termine par deux extrémités 12' légèrement repliées vers l'arrière grâce à une pliure élastique 12p. Par « profil curviligne » de la partie fixe 11, on entend une forme en saillie vers l'avant du véhicule qui pénètre dans la concavité ou partie creuse de la traverse 1 et épouse par son bord périphérique les parois supérieure et inférieure ainsi que la paroi avant ou frontale (parois délimitant la concavité en question). Le volet mobile 12 forme du côté opposé à l'articulation de charnière 30 un bord rectiligne qui est destiné à venir se plaquer contre un côté vertical 5 du guide d'air 4. La partie fixe 11 comprend essentiellement une surface d'obturation principale 13 définie entre une bordure rectiligne 14 le long de laquelle est formée la charnière attachant le volet 12 et une bordure curviligne 15 épousant le relief interne de la traverse 1 et formant de ce fait deux cornes 16 destinées à aller dans les rainures 7. La bordure curviligne 15 est entourée par une jupe de surface réglée cylindrique suivant ladite bordure et formant une surface plane centrale 17 entourée à 90° par deux goussets triangulaires 18 qui la relient à deux pattes planes 19 qui se rattachent au volet mobile 12 dans les prolongements de la bordure rectiligne 14 au niveau de l'articulation de charnière 30. La surface plane centrale 17 comporte une indentation 20 au-dessus de laquelle est disposé un moyen de positionnement/fixation rapide tel qu'un pion cruciforme 21 moulé en même temps que l'obturateur. Les deux pattes planes 19 comportent chacune un moyen de fixation rapide 22 formé par exemple en forme de harpon avec des dents anti-retour, également moulé intégralement. Un trou 23, sur la zone de plateau 8 de la traverse 1 (figure 1) permet l'enfoncement du pion cruciforme 21 et deux trous 24 au niveau des rebords 6 permettent l'enfoncement des harpons 22 de sorte que ces moyens 21, 22 assurent le positionnement exact et la fixation de la partie fixe 11 dans la concavité de la traverse 1 de la manière représentée en figure 2A, avec la surface principale 13 obturant la section transversale de la traverse 1. Cette surface principale 13 est perpendiculaire à la direction d'extension de la traverse 1 et la fixation est solide grâce à l'appui des surfaces 17 et 19 respectivement sur les parties planes 8 et 6 de la traverse 1. Dans cette position, la bordure rectiligne 14 est verticale et longe l'articulation verticale de charnière 30 qui sépare le volet mobile 12 de la partie fixe 11. Cette articulation de charnière 30 est moulée en même temps que l'obturateur 10 et est constituée de manière classique par un voile aminci de matière. Elle s'étend sensiblement sur toute la hauteur verticale de la partie fixe 11, mais est interrompue par les moyens 40 de blocage en position du volet mobile 12, disposés sensiblement à mi-hauteur, qui seront détaillés plus loin. Sur la figure 2A, le volet mobile 12 est représenté en position rabattue, où il est sensiblement parallèle aux surfaces planes 6, 8, 17, 19, position rabattue qui correspond à la première position de montage.

On a représenté sur la figure 2B un obturateur analogue 10 pour la zone B. Sa forme exacte peut être légèrement différente de celle de l'obturateur de la figure 2A, dans la mesure où la section de la traverse 1 n'est pas absolument identique tout au long de son extension, donc au niveau des zones A et B. Néanmoins on retrouve exactement les mêmes éléments et notamment bien sûr la partie fixe 11 et le volet mobile 12, ici représenté en position d'extension, où il est parallèle à la surface 17 de la partie 11, cette position étant maintenue grâce aux moyens de blocage 40.

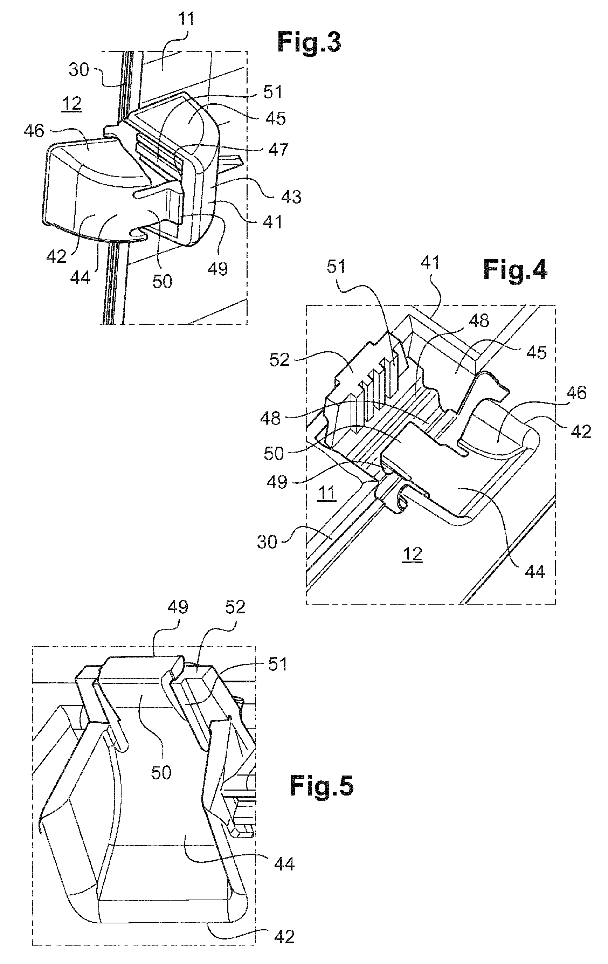

Les moyens de blocage 40 vont maintenant être décrits en détail en référence aux figures 3, 4 et 5. Ils comportent essentiellement deux godets emboîtants 41, 42 formés respectivement par moulage sur la partie fixe 11 et sur la partie mobile 12. Les godets 41, 42 sont sous forme de secteurs cylindriques dont le sommet est centré globalement sur l'articulation de charnière 30. Chaque godet comporte une surface cylindrique 43, 44 et des joues latérales 45, 46. Le godet femelle 41 définit une face d'entrée ouverte par une ouverture rectangulaire 47 dans laquelle peut pénétrer le godet mâle 42 lors du pivotement du volet mobile 12 sur la partie fixe 11. La face interne de la surface cylindrique 43 comporte des cannelures 48 formant des crans parallèles derrière l'ouverture 47, avec lesquels peut coopérer la griffe 49 d'une patte élastique 50 formée dans le prolongement de la surface cylindrique 44 du godet mâle 42. Ainsi, lors du pivotement du volet mobile 12 sur la partie fixe 11, la coopération de la griffe 49 et de l'une ou l'autre des cannelures transversales 48 définit des positions de blocage réversible du pivotement d'une pièce dans l'autre ; le volet 12 est alors dans sa position d'extension représentée sur la figure 2B. Si le pivotement du volet mobile 12 se poursuit entièrement jusqu'à l'entier enfoncement du godet mâle 42 dans le godet femelle 41, la patte 50 vient longer un massif 51 formé à l'arrière du godet 41 et vient se bloquer par sa griffe 49 sur le plateau 52 qui termine le massif 51, bloquant ainsi le volet mobile 12 dans sa position rabattue représentée en figure 2A.

La figure 7 montre une coupe à travers la charnière 30, au niveau des godets emboîtants 41, 42. La figure montre bien la charnière 30 réalisée par un voile aminci entre les parties 11 et 12. Le volet 12 a été représenté en position de moulage, où il fait un angle d'environ 21° avec l'horizontale, ce qui permet de mouler la patte 50 et la griffe 49 parce qu'elle ne sont pas engagées dans le godet femelle 41. On a représenté sur le même dessin des positions 12-1, 12-2, 12-3 et 12-4 du volet mobile, la position 12-2 étant la position d'extension représentée en figure 2B et la position 12-4 étant la position rabattue représentée en figure 2A.

L'obturateur de l'invention est monté de la manière suivante, au moment d'installer la valise de refroidissement dans le compartiment moteur. Les obturateurs 10 sont montés dans la concavité de la traverse extrême 1 avec le volet mobile 12 dans la position rabattue représentée figure 2A. Le cadre de guide d'air 4 est installé juste en arrière de la traverse 1, et un monteur vient ouvrir les volets rabattus 12 pour les plaquer contre la paroi verticale du cadre de guide d'air 4. La souplesse du volet 12 fait que le volet 12 se plaque contre ladite paroi, les pliures 12p s'aplatissant, et il n'y a pratiquement pas de débit latéral de fuite d'air au niveau de la traverse dans les zones A et B ce qui permet d'optimiser le rendement du condenseur.

L'utilisation d'une charnière moulée telle que décrite, à godets emboîtants de blocage pour réaliser les obturateurs de l'invention, permet de former des obturateurs sensiblement étanches, même le long de l'articulation de charnière et des moyens de blocage en position.

## Revendications

1. Obturateur (10) sous forme de plaque comportant un bord curviligne (15) et un bord rectiligne, le bord curviligne (15) étant adapté à la section concave d'une traverse extrême avant (1) de véhicule, et le bord rectiligne étant adapté à se plaquer contre un bord (5) de guide d'air (4) l'obturateur (10) étant formé de deux parties (11, 12) articulées par une charnière sensiblement étanche, une première partie (11) comportant essentiellement le bord curviligne (15) et une seconde partie (12) comportant essentiellement le bord rectiligne, la charnière comportant des moyens de blocage (40) en différentes positions de la seconde partie (12) par rapport à la première (11), **caractérisé en ce qu'**il y a au moins une position étendue sensiblement dans le prolongement de la première partie (11) et une position rabattue sensiblement perpendiculaire à la position étendue.

2. Obturateur selon la revendication 1, **caractérisé en ce que** la première partie comporte des moyens de fixation (21, 22) rapide à la traverse (1).

3. Obturateur selon la revendication 1 ou 2, **caractérisé en ce que** les moyens de blocage (40) consistent d'une part en un crantage (48) formé sur une partie (11) et d'autre part en une griffe élastique (49) d'engagement avec le crantage formé sur l'autre partie (12).

4. Obturateur selon l'une des revendications 1 à 3, **caractérisé en ce qu'**il est moulé en une matière plastique.

5. Obturateur selon la revendication 4, **caractérisé en ce que** l'articulation de charnière (30) est constituée par une zone amincie comprise entre les deux parties (11, 12).

6. Obturateur selon la revendication 4 ou 5, **caractérisé en ce que** les moyens de blocage (40) en position sont formés sur deux godets (41, 42) s'emboîtant l'un dans l'autre lors du pivotement d'une partie (12) par rapport à l'autre (11).

7. Agencement de compartiment moteur de véhicule, comprenant vers l'avant du véhicule une traverse d'extrémité (1) de châssis présentant une concavité tournée vers l'arrière, et un guide d'air (4) comprenant deux bords verticaux (5) adjacents à ladite traverse (1) du côté de sa concavité, **caractérisé en ce qu'**il comprend deux obturateurs (10) selon l'une quelconque des revendications précédentes fixés dans la concavité de la traverse (1) au droit desdits deux bords (5) verticaux de guide d'air.

## Patentansprüche

1. Verschlusskörper (10) in der Form einer Platte, aufweisend einen krummlinigen Rand (15) und einen geradlinigen Rand, wobei der krummlinige Rand (15) an den konkaven Querschnitt eines Frontend-Fahrzeugquerträgers (1) angepasst ist und der geradlinige Rand dafür angepasst ist, sich gegen einen Rand (5) einer Luftführung (4) zu pressen, wobei der Verschlusskörper (10) aus zwei Teilen (11, 12) gebildet ist, welche durch ein im Wesentlichen dichtes Scharnier angelenkt sind, wobei ein erstes Teil (11) im Wesentlichen den krummlinigen Rand (15) aufweist und ein zweites Teil (12) im Wesentlichen den geradlinigen Rand aufweist, wobei das Scharnier Mittel (40) zur Blockierung des zweiten Teils (12) in verschiedenen Positionen in Bezug auf das erste (11) aufweist, **dadurch gekennzeichnet, dass** es mindestens eine im Wesentlichen in der Verlängerung des ersten Teils (11) ausgestreckte Position und eine abgeklappte Position gibt, welche im Wesentlichen senkrecht zur ausgestreckten Position ist.

2. Verschlusskörper nach Anspruch 1, **dadurch gekennzeichnet, dass** das erste Teil Mittel zur schnellen Befestigung (21, 22) an dem Querträger (1) aufweist.

3. Verschlusskörper nach Anspruch 1 oder 2, **dadurch gekennzeichnet, dass** die Blockierungsmittel (40) einerseits aus einer auf einem Teil (11) ausgebildeten Rastausnehmung (48) und andererseits aus einer an dem anderen Teil (12) ausgebildeten elastischen Kralle (49) zum Eingriff mit der Rastausnehmung bestehen.

4. Verschlusskörper nach einem der Ansprüche 1 bis 3, **dadurch gekennzeichnet, dass** er aus einem Kunststoff abgeformt ist.

5. Verschlusskörper nach Anspruch 4, **dadurch gekennzeichnet, dass** das Scharniergelenk (30) aus einem dünner gemachten Bereich gebildet wird, welcher zwischen den beiden Teilen (11, 12) liegt.

6. Verschlusskörper nach Anspruch 4 oder 5, **dadurch gekennzeichnet, dass** die Blockierungsmittel (40) in Position auf zwei Näpfen (41, 42) ausgebildet sind, welche sich beim Schwenken des einen Teils (12) in Bezug auf das andere (11) ineinander einfügen.

7. Anordnung eines Fahrzeugmotorraums, aufweisend in Richtung des vorderen Teils des Fahrzeugs einen Karosserie-Frontend-Querträger (1), welcher eine in Richtung des hinteren Teils gedrehte Konkavität aufweist, und eine Luftführung (4), welche zwei vertikale Ränder (5) aufweist, welche zu dem Querträger (1) auf der Seite seiner Konkavität benachbart sind, **dadurch gekennzeichnet, dass** sie zwei Verschlusskörper (10) nach einem der vorhergehenden Ansprüche aufweist, welche in der Konkavität des Querträgers (1) vor den beiden senkrechten Rändern (5) der Luftführung befestigt sind.

## Claims

1. Seal (10) in the form of a plate including a curved edge (15) and a straight edge, the curved edge (15) being adapted to fit the concave section of a front-end cross member (1) of a vehicle, and the straight edge being adapted to press against an edge (5) of an air guide (4), the seal (10) consisting of two parts (11, 12) hingedly connected by a substantially airtight hinge, a first part (11) essentially including the curved edge (15) and a second part (12) essentially including the straight edge, the hinge including means (40) for locking the second part (12) in various positions relative to the first part (11), **characterized in that** there is at least one position extending substantially in the prolongation of the first part (11) and a folded position substantially perpendicular to the extended position.

2. Seal according to Claim 1, **characterized in that** the first part includes means of rapid attachment (21, 22) to the cross member (1).

3. Seal according to Claim 1 or 2, **characterized in that** the means for locking (40) consist, on the one hand, of a detent (48) formed on one part (11) and, on the other hand, of an elastic claw (49) for engagement with the detent formed on the other part (12).

4. Seal according to one of Claims 1 to 3, **characterized in that** it is moulded from a plastic material.

5. Seal according to Claim 4, **characterized in that** the hinged articulation (30) is constituted by a zone of reduced thickness lying between the two parts (11, 12).

6. Seal according to Claim 4 or 5, **characterized in that** the means (40) for locking in position are formed on two hinge cups (41, 42) fitting one into the other in the course of the pivoting of one part (12) relative to the other (11).

7. Arrangement of an engine compartment of a motor vehicle, comprising towards the front of the vehicle a chassis end cross member (1) exhibiting a recess facing towards the rear and an air guide (4) comprising two vertical edges (5) adjacent to said cross member (1) on the side of its recess, **characterized in that** it comprises two seals (10) according to any one of the preceding claims attached in the recess of the cross member (1) at right angles to said two vertical edges (5) of the air guide.
